# EUROPEAN PATENT APPLICATION

(11) **EP 4 311 977 A1**
(43) Date of publication of application: **31.01.2024**
(21) Application number: 22187790.5
(22) Date of filing: 29.07.2022
(51) Int. Cl.: F21S 43/14, F21S 43/15, F21S 43/19, F21S 43/239, F21S 43/245, F21S 43/249, F21S 43/50, F21S 43/27

(54) **AUTOMOTIVE LIGHTING APPLIANCE**

(71) Applicant: Marelli Automotive Lighting Italy S.p.A. Con Socio Unico, 10078 Venaria Reale (TO) (IT)
(72) Inventor: HERLIN, Jean-Pascal, 10078 VENARIA REALE (TO) (IT); ANTONIPIERI, Michele, 33028 TOLMEZZO (UD) (IT); MESTRINER, Riccardo, 33028 TOLMEZZO (UD) (IT)
(74) Representative: Studio Torta S.p.A.

(57) **Abstract**

An automotive lighting appliance (1) internally having a lighting assembly (6) comprising a plurality of light-guide plates (8), which are arranged side by side and have respective light-entry faces (8a) to receive light, and respective light-emitting faces (8b) that are adapted to emit light. The lighting assembly (6) further comprises a plurality of mini-LED array modules (9a), which are arranged adjacent to the light-entry side faces so that the light provided by a mini-LED array module (9a) to a light-entry side face (8a) of a light-guide plate (8) is emitted through the light-emitting face (8b) of the light-guide plate (8).

## Description

### FIELD OF THE ART

The present invention relates to an automotive lighting appliance.

More in detail, the present invention relates to a lighting appliance, preferably a rear lighting unit or headlight for cars and similar vehicles, which is designed so as to implement both the traditional automotive photometric lighting functions (i.e. to signal the position, and/or the sudden deceleration, and/or the turning direction of the vehicle, and/or to illuminate the area surrounding the vehicle), and the "communicative" lighting functions for generating symbols, messages or images. The discussion that follows will make explicit reference to the use thereof without losing generality.

As known, the new generation motor vehicles have automotive lighting appliances that are designed so as to perform, in addition to the traditional "automotive" photometric lighting functions, also communicative lighting functions. The communicative functions essentially consist in generating and displaying symbols, messages, pictograms, static images (still images) or dynamic images (animated or moving images) on the outside of the vehicle by the lighting appliance.

In orr to implement both the aforementioned automotive lighting photometric and communicative functions while guaranteeing the display of the functions on large lighting surfaces, some lighting appliance manufacturers have developed lighting appliances provided with OLED (Organic Light Emitting Diode) technology comprising OLED light sources.

The lighting units with OLED technology are particularly advantageous in that, besides generating both the functions described above, they ensure a certain light uniformity even when the lighting appliance has a particularly large light surface area, a condition that fulfils both the aesthetic and functional requirements of the new generation automotive lighting appliances.

However, the OLED-technology lighting appliances described above have a number of drawbacks, one of which is the particularly high cost of the OLED-source lighting assembly, which affects considerably the overall cost of the automotive lighting appliance.

A requirement of automotive lighting appliance manufacturers is therefore to find lighting assembly solutions having an electronic lighting architecture which, on the one hand, is simple and cost-effective to realise compared to the OLED-source lighting technology and, on the other hand, allows to maintain the same technical advantages (mentioned above) as the automotive lighting appliances having an OLED lighting assembly.

For this purpose, the Applicant has conceived an automotive lighting appliance provided with a lighting assembly having a lighting surface. The lighting surface consists of a plurality of light-guide plates. The light sources consist of "standard" non-organic LEDs (not OLEDs), which are arranged at a predetermined distance from each other (mutual distance indicated by "pitch") so that they are adjacent to and facing the light-entry side faces of the light-guide plates to provide light.

In use, LED sources are controlled to cause a selective light emission through the emitting faces of the light-guide plates in order to generate lighting effects through the lighting surface, similar to those achievable through an OLED architecture. A lighting appliance of this type is disclosed, for example, in European Patent No. EP 3 531 404 B1 to the same Applicant.

Tests carried out by the Applicant have shown that LED light sources nevertheless generate light cones at the side edge of the emitting face adjacent to the light-entry side face. The formation of cones of light on the emitting face is particularly disadvantageous in that it results in a localised lighting unevenness on the emitting face itself that can be seen by observers.

In order to overcome the aforesaid technical drawback, the Applicant has devised a solution whereby a mask in the form of a rectangular frame made of non-transparent material is attached to the light-guide plate in order to mask/cover the side edge of the emitting face subject to the light cones and accommodate the LEDs.

The Applicant has found that, while on the one hand the use of the perimeter mask allows to advantageously overcome the aesthetic issue associated with the localised formation of light cones, on the other hand its sides cause the formation of a series of dark, i.e. non-illuminated lines or strokes on the lighting surface, the thickness of which affects remarkably the overall light uniformity of the lighting appliance. In fact, the greater the transverse width of the mask, the greater the thickness of the corresponding non-illuminated lines and the lower the degree of uniformity of the light generated by the lighting surface of the lighting appliance. There is therefore a technical need to reduce the thickness of the non-illuminated lines determined by the mask so as to improve the aesthetic appearance of the lighting surface of the lighting appliance without affecting the manufacturing costs of the lighting appliance.

### DISCLOSURE OF THE INVENTION

The aim of the present invention is to realise an automotive lighting appliance provided with a lighting surface having a light uniformity comparable to that achievable by means of OLED technology, but at a lower cost.

In accordance with these aims, according to the present invention there is provided an automotive lighting appliance as defined in Claim 1 and preferably, though not necessarily, in any one of the Claims depending on it.

The Claims describe preferred embodiments of the present invention and form an integral part of the present description.

### BRIEF DESCRIPTION OF THE DRAWINGS

The present invention will now be described with reference to the attached drawings, which shows a nonlimiting embodiment thereof, wherein:
Figure 1 shows an exemplary embodiment of an automotive vehicle provided with an automotive lighting appliance realised according to the dictates of the present invention,
Figure 2 is an exploded view of an automotive lighting appliance realised according to the dictates of the present invention,
Figure 3 is a perspective view of the automotive lighting appliance shown in Figure 2, with parts removed for clarity's sake,
Figure 4 is a front elevation view of the automotive lighting appliance shown in Figure 2 with parts removed and parts enlarged on a scale for clarity's sake,
Figure 5 is a perspective view of the automotive lighting appliance shown in Figure 2 with parts removed, section parts and parts enlarged on a scale for clarity's sake,
Figures 6 and 7 are section I-I and respectively section II-II of the automotive lighting appliance shown in Figure 4,
Figure 8 is a perspective view of a light-guide plate,
Figure 9 shows a Mini-LED module facing the relative light-guide plate,
Figure 10 is a section view with parts enlarged on a scale of a mini-LED module and a light-guide plate,
Figure 11 is an exemplary front schematic view of light-guide plates placed side by side on a reference plane and the associated mini-LED modules,
Figures 12 and 13 show sections III-III and respectively IV-IV of the reference light-guide plates and relative mini-LED modules shown in Figure 11.
Figure 14 is a perspective view of an automotive lighting appliance realised according to a variant.

The present invention will now be described in detail with reference to the accompanying Figures to allow a person skilled in the art to realise and use it.

Various modifications to the embodiments described will be immediately clear to those skilled in the art and the general principles disclosed can be applied to other embodiments and applications without departing from the protection scope of the present invention, as defined in the enclosed Claims.

Therefore, the present invention must not be considered as limited to the embodiments described and shown, however it must be granted the widest protection scope complying with the herein described and claimed principles and features.

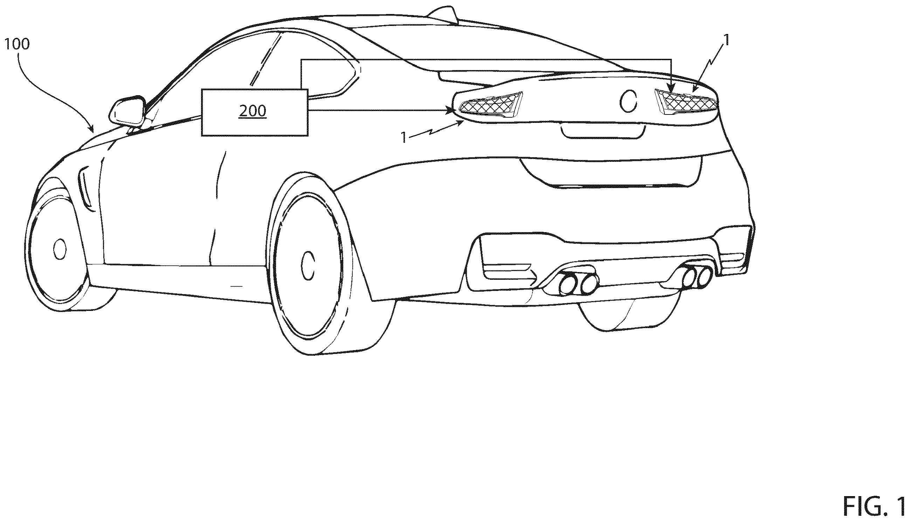

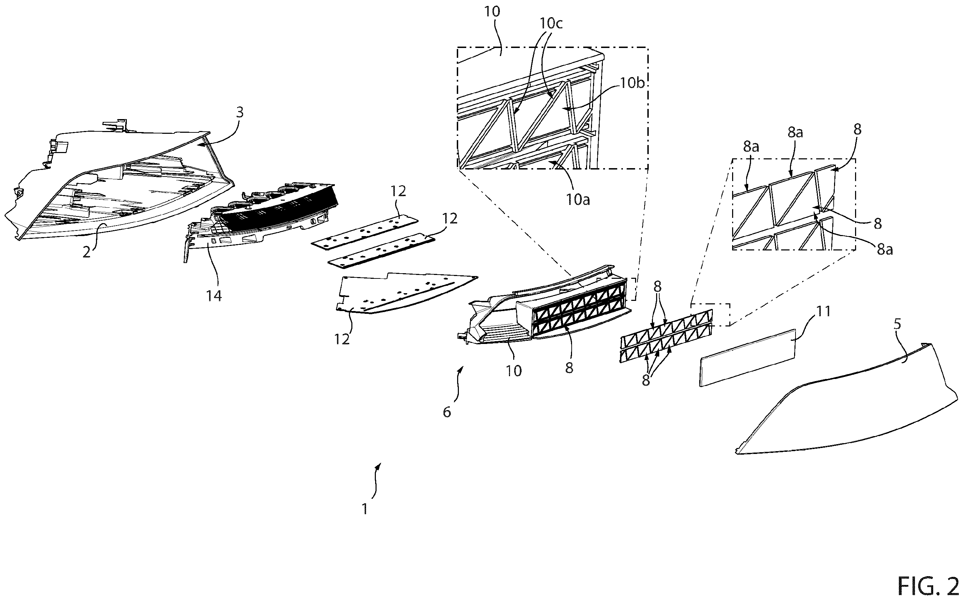

With reference to Figures 1 and 2, an automotive lighting appliance (also referred to as automotive light unit, or automotive optical assembly) is schematically shown as a whole with number 1. In the exemplary embodiment shown in Figure 1, the automotive lighting appliance 1 is arranged on one side of a vehicle 100. In the example shown in Figure 1, the vehicle 100 is a car.

However, it is understood that the present invention is not limited to the lighting appliance 1 applied to a car, but it may also provide to use the lighting appliance 1 in a truck, a coach, or any other similar motor vehicle.

The vehicle 100 may be provided with an electronic control unit 200 electrically connected to the automotive lighting appliance 1 in order to control it so that the automotive lighting appliance 1 performs automotive lighting functions.

The automotive lighting appliance 1 is designed so that it can be (stably) coupled to, and/or incorporated into, the vehicle 100, at the front, and/or at the side, and/or at the back. In the preferred embodiment shown in Figure 1, the automotive lighting appliance 1 corresponds to a rear light of the vehicle 100.

It is understood, however, that the present invention is not limited to an automotive rear light, but can be similarly applied to any automotive lighting appliance of the vehicle 100, such as a headlight and/or side lighting appliance of the vehicle 100.

In other words, in the following description, the term automotive lighting appliance 1 shall optionally mean, at least: a rear light, a headlight, a side lighting appliance, an exterior position light, a direction indicator (colloquially referred to as turn signal), a stop lamp (colloquially referred to as stop light), a fog light, a reverse light, a dipped headlight, a high beam light, a lighting appliance arranged on the front grille, or any other type of lighting appliance that can be installed on a vehicle 100.

The automotive lighting appliance 1 is configured to perform one or more automotive photometric lighting functions and/or one or more automotive communicative lighting functions on command.

The automotive photometric light functions may comprise light-emitting automotive lighting functions to illuminate the area around the vehicle 100 (low beam, high beam, fog lamps) so that the driver can see, for example, the roadway. In addition or in alternative, the automotive photometric light functions may comprise automotive signalling functions to signal the presence of the vehicle 100. In addition or in alternative, the automotive photometric light functions may comprise functions to signal the position of the vehicle 100. In addition or in alternative, the automotive photometric light functions may comprise automotive signalling functions to signal: a movement direction of the vehicle 100 (direction indicator), and/or a braking (stop) condition, and/or a reverse condition, and/or an alarm/emergency condition, and/or a vehicle lock/unlock condition, and/or similar automotive conditions.

The automotive communicative lighting functions, when implemented, may generate, via the lighting appliance 1, the display outside the vehicle of symbols, and/or messages, and/or pictograms, and/or images, or similar. Symbols, messages, pictograms, and images may be of the "fixed" type, i.e. they do not change and do not move on the lighting appliance 1 (static). Alternatively or additionally, the symbols, messages, pictograms, and images may be of the "non-fixed" type, i.e. they may modify/change and/or move on the emitting surface of the lighting appliance 1 (dynamic or animated or moving images).

It is understood that the lighting appliance 1 may be configured to perform one or more automotive communicative lighting functions and at the same time (simultaneously) one or more automotive photometric lighting functions.

With reference to a possible exemplary embodiment shown in Figures 2, the automotive lighting appliance 1 may comprise a container body 2. In the example shown, the container body 2 is shaped to form a hull, e.g. at the rear. The container body 2 may be preferably, but not necessarily, cup-shaped. The container body 2 may include an inner cavity or seat 3. The inner seat 3 may have an opening or mouth.

It is understood that according to the present invention, the container body 2 may have any shape and may be designed to be mechanically connected to the vehicle 100.

According to an exemplary embodiment, the container body 2 may be designed so that it is preferably, but not necessarily, recessed, for example, within a compartment (not shown) formed in/on the shell of the vehicle 100 (Figure 1) .

As shown in Figure 2, the automotive lighting appliance 1 may also preferably comprise a lenticular body 5.

The lenticular body 5 may be arranged in the lighting appliance 1 in a front position. The front position of the lenticular body 5 is opposite the rear position of the container body 2. The lenticular body 5 may define a face of the lighting appliance 1. As shown in the attached Figures, the face consisting of the lenticular body 5 is placed/addressed towards the space outside the lighting appliance 1 and has an inner face addressed towards the seat 3. For example, the lenticular body 5 may be shaped into a semi-shell.

It is understood that the lenticular body 5 of the lighting appliance 1 object of the present invention may have any shape and/or cross-section and/or dimensions.

For example, the shape of the lenticular body 5 may be, at least partially, two-dimensional, i.e. extending/laying on a flat (approximately flat) surface, and/or at least partially three-dimensional, i.e. extending on a complex surface having a regular or irregular shape that extends on three dimensions.

The lenticular body 5 may be made, for example, completely and/or at least partially, of transparent or semi-transparent or translucent material. It is understood that the lenticular body 5 may be realised, additionally or alternatively, so as to comprise one or more opaque portions adapted to be crossed in use by light beams.

The lenticular body 5 may be shaped and/or designed so that it can be coupled to the container body 2. The lenticular body 5 can be coupled to the container body 2, for example, at the mouth of the cavity or inner seat 3 so as to close it. For example, the lenticular body 5 may be conveniently made of resins (pmma or pc) and/or polymeric materials. The lenticular body 5 may be designed so as to have transparent or semi-transparent or translucent sectors.

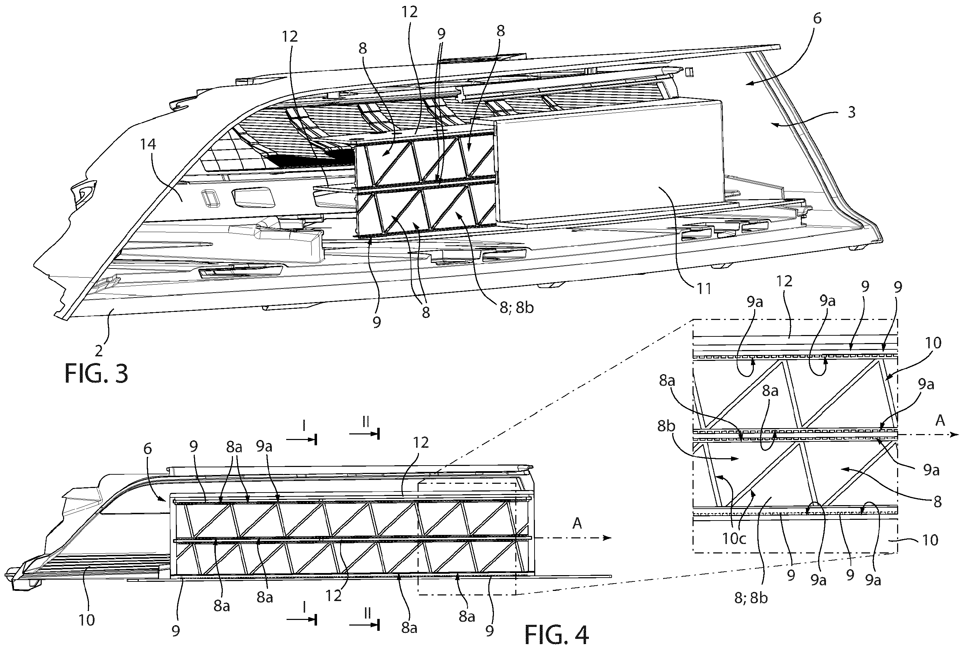

As shown in Figures 2 and 3, the automotive lighting appliance 1 also comprises a lighting assembly 6 configured to emit light.

The lighting assembly 6 is arranged in the container body 2. The lighting assembly 6 is configured so as to emit light towards the outside of the vehicle 100 through the lenticular body 5.

According to a preferred embodiment of the present invention shown in Figures 2-14, the lighting assembly 6 comprises: a plurality of light-guide plates 8 and mini-LED array modules 9.

Preferably, mini-LED modules 9 comprise electronic control circuits configured so as to receive electrical control signals and are provided with a plurality of mini-LEDs 9a. The mini-LEDs 9a of the mini-LED modules 9 are preferably arranged one after the other at a certain distance D1 (pitch) from each other so as to form an array of mini-LEDs 9a.

As far as light-guide plates 8 are concerned, they are mutually arranged side by side, one next to the other. The light-guide plates 8 are arranged adjacent to each other and lie on a common predetermined surface plane, which in the examples shown is preferably facing the inner face of the lenticular body 5. The light-guide plates 8 lie on the predetermined surface plane so as to form a mosaic of lighting surface tiles or portions (Figures 2, 3, 4, 5, 11 and 14).

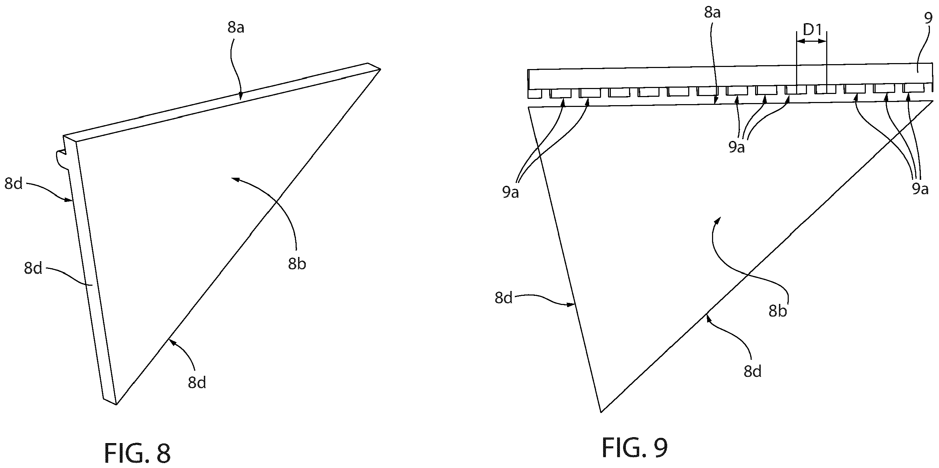

With reference to Figure 8-11, the light-guide plates 8 have (each) one light-entry side wall or face 8a adapted to receive light, and one light-emitting wall or face 8b adapted to emit light. The light-guide plates 8 are designed so as to channel the light received through the light-entry side face 8a to the outside of the light-guide plates 8 themselves, through the light-emitting face 8b.

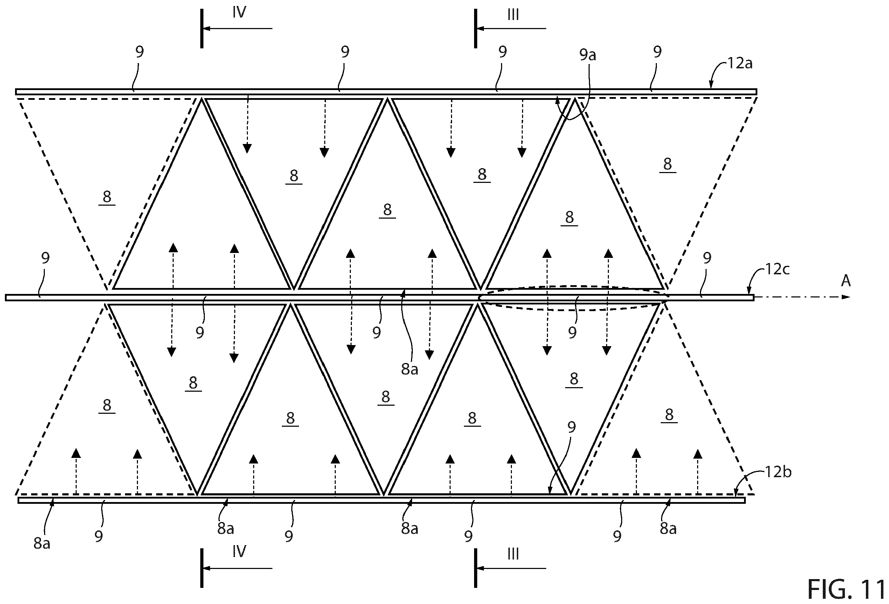

In the embodiment shown in Figures 8 and 11, the light-emitting face 8b extends in a transverse plane, e.g. approximately orthogonal, to the lying plane of the light-entry side face 8 of the corresponding light-guide plate 8.

As shown in Figures 3-14, the light-entry side faces 8a of the light-guide plates 8 are arranged immediately adjacent and facing the mini-LEDs 9a of respective mini-LED array modules 9. In other words, as shown in Figures 8, 9-13 the mini-LEDs 9a of the mini-LED array modules 9 are immediately facing, and close to, the light-entry side face 8a of a respective light-guide plate 8.

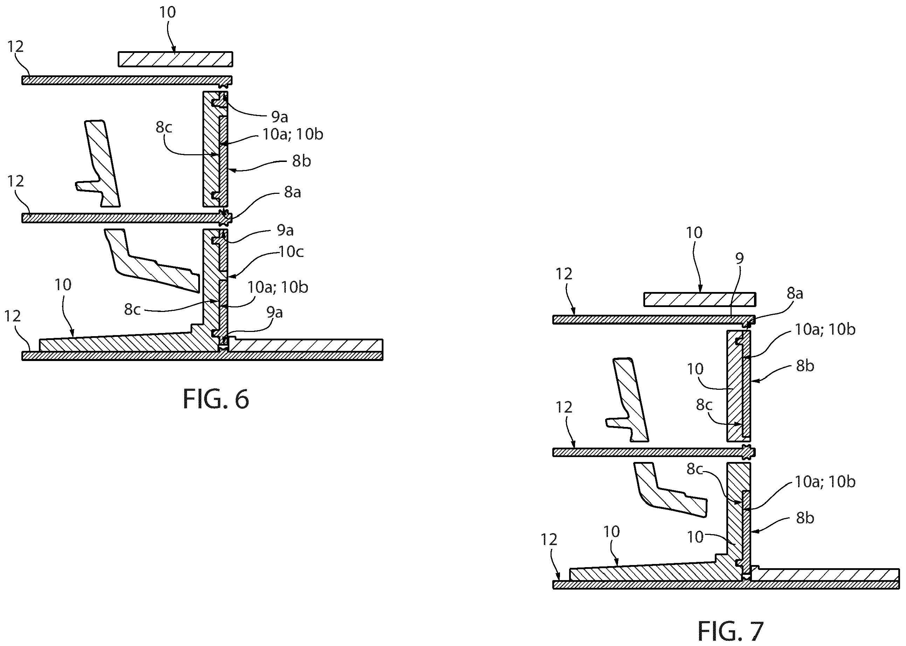

According to a preferred exemplary embodiment of the present invention shown in Figures 2-14, the light-guide plates 8 may preferably have a substantially flat polygonal shape. Preferably, the section of the light-guide plates 8 orthogonal to the emitting face 8b may be approximately rectangular (Figures 6 and 7).

In the example shown in Figures 2-14 and in the following discussion, explicit reference will be made, without losing generality, to light-guide plates 8 conveniently having an approximately triangular (perimeter) shape.

However, it is understood that the present invention is not to be considered as limited to the use of triangular light-guide plates 8, but other polygonal geometric shapes other than the triangular one, such as quadrangular or similar, may be devised.

With reference to Figures 8 and 9, the light-guide plate 8 comprises two walls or major faces, opposite to each other, and an outer perimeter edge formed by a series of sides (three sides in the attached Figures). At least one of the sides of the outer perimeter edge of the light-guide plate 8 is designed so as to form the side light-entry face 8a of the light-guide plate 8.

The light-entry face 8a is arranged in a position immediately adjacent and facing the relevant mini-LED array module 9 so as to receive the light emitted by the mini-LEDs 9a of the mini-LED array module 9 itself. The light-entry face 8a is designed to feed/inject light into the body of the light-guide plate 8.

With reference to the preferred embodiment shown in Figures 6 and 7, one major face of the light-guide plate 8 is a light-diffusive face 8c. The other major face of the light-guide plate 8, opposite the diffusive face 8c, is the light-emitting face 8b.

According to the present invention, the light-guide plate 8 is designed so that the light received through the light-emitting side face 8 travels, is diffused and reflected within the body of the light-guide plate 8 so as to be extracted/emitted outside the light-guide plate 8 through the light-emitting face 8b.

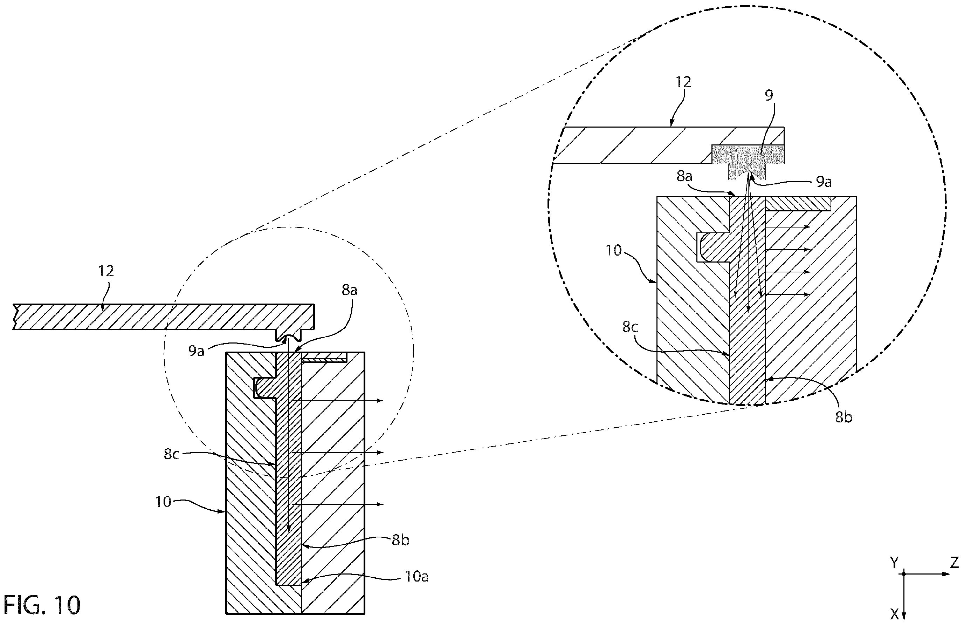

Preferably, the light-guide plate 8 is designed so that the light received through the light-entry face 8a travels into the body of the light-guide plate 8 so as to fulfil a condition of total reflection between the opposite walls/faces of the light-guide plate 8 with respect to a predetermined propagation direction X (Figure 10).

The light-guide plate 8 is also designed so that the light received through the light-entry side face 8a is also uniformly diffused towards the remaining sides 8d of the perimeter edge according to a direction Y transverse to the predetermined travelling direction X and is emitted outwards according to a direction Z through the emitting face 8b (Figure 10).

Preferably, the light-entry side face 8a may be provided with a plurality of optical elements (not shown) designed to have the light received by the mini-LED module 9 diverge (be opened) within the body of the light-guide plate 8 with respect to the travelling direction X towards the sides 8d. For example, grooves or reliefs with a sinusoidal or cylindrical cross-section can be obtained on the light-entry side face 8a. The light-entry side face 8a of the light-guide plate 8 may lie for instance on a plane conveniently parallel to the lying plane of the respective mini-LED array module 9.

The light-diffusive face 8c may comprise diffusive elements (not shown) designed to diffuse the light within the body of the light-guide plate 8. For example, the diffusive elements of the light-diffusive face 8c formed by point-like micro-depressions. Preferably, the diffusive elements may have an uneven distribution on the diffusive face 8c and have, for example, a density that increases progressively as the distance from the light-entry side face 8a increases.

The lighting appliance 1 may additionally comprise a reflector body (not shown) which is associated with the light-diffusive face 8c and is designed to reflect light towards the light-emitting face 8b so as to emit it outside the light-guide plate 8. The reflector body may comprise a film made of reflective material, such as a white film. It is understood that the light-guide plates 8 can be made, for example, as described in Patent EP 3 531 404 B1 to the Applicant, the contents of which is herein incorporated by reference.

According to an embodiment of the present invention shown in Figures 2-7, the light-guide plates 8 are supported by a support frame 10 comprised in the lighting appliance 1.

In the example shown in Figures 2 to 7, the support frame 10 is placed in the inner seat 3 of the container body 2. The support frame 10 has a wall or face 10a designed to support the light-guide plates 8 placed side by side to each other on the predetermined surface plane. In the example shown in Figures 2-7, the face 10a is basically addressed towards, i.e. facing, the lenticular body 5. The face 10a may be flat and extend on an approximately vertical plane.

In the example shown in Figures 2-7, the face 10a has a substantially flat (approximately two-dimensional) surface shape and supports the light-guide plates 8 placed side by side to each other in the predetermined approximately flat surface plane.

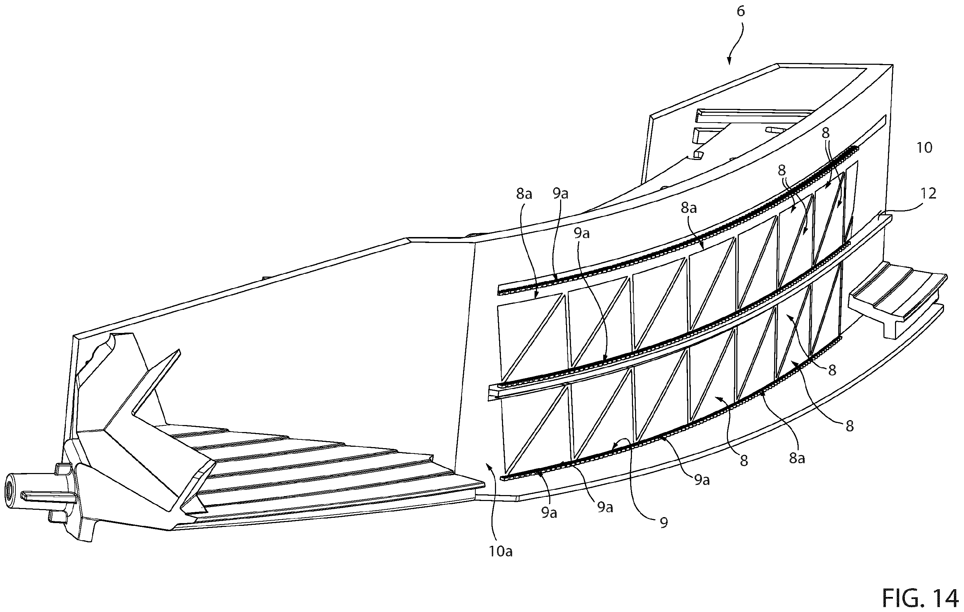

It is understood, however, that the face 10a is not limited to a substantially flat (approximately two-dimensional) surface shape, but may have a surface of a different shape, such as three-dimensional, such that the light-guide plates 8 are placed side by side with each other on the predetermined three-dimensional surface plane. For example, the embodiment shown in Figure 14 relates to a lighting appliance 1 wherein the light-guide plates 8 are placed side by side with each other on a predetermined three-dimensional surface plane corresponding to a curved surface plane, i.e. having a curved section.

On the face 10a of the support frame 10, shaped seats 10b are provided to house the light-guide plates 8 in their mutually side-by-side positions. In the example shown, the seats 10b have a shape substantially complementary to the outer perimeter shape of the respective light-guide plates 8 so that they are stably housed therein. In the example shown, the seats 10b have an approximately triangular shape that is complementary to the triangular perimeter shape of the light-guide plates 8.

The seats 10b may be bounded by a perimeter border formed by a series of sides or made of a non-transparent material, i.e. not penetrated by light. The walls delimiting the seats 10b may consist of respective shielding partitions 10c or rectilinear reliefs (Figure 2). The shielding partitions 10c extend cantilevered from the face 10a of the frame 10 and have a small transverse thickness that is dimensioned so as to be interposed between one side 8d of a light-guide plate 8 and one side 8d of an adjacent light-guide plate 8. The shielding partitions 10c surrounding a seat 10a are designed so as to support the sides 8d of the light-guide plates 8 and prevent light injected by the mini-LEDs 9a into a light-guide plate 8 and exiting from one side 8d from entering an adjacent light-guide plate 8 through a relative side 8d.

Conveniently, according to a possible embodiment shown in Figures 2 and 3, the light-guide plates 8 are held within their respective seats 10a approximately resting against the face 10a by means of a plate-shaped body. In the example shown, the plate-shaped body 11 may be mechanically coupled to the frame 10 so as to trap the light-guide plates 8 in the relative seats 10a. The plate-shaped body 11 may comprise a thin slab or panel made of transparent material. The plate-shaped body 11 may be mechanically coupled/connected to the frame 10 so as to have its inner face approximately resting on the emitting faces 8b of the light-guide plates 8 so as to keep the light-guide plates 8 abutting against the face 10a of the support frame 10 in order to trap them in their respective seats 10b.

According to a possible embodiment shown in Figures 2, 3, 4 and 6, the light-guide plates 8 are arranged contiguously one after the other and lie on the predetermined surface plane so as to form one or more lines or rows of aligned light-guide plates 8.

In the exemplary embodiment shown in Figures 3-7, wherein the light-guide plates 8 have substantially similar triangular shapes, each row or line extends along a reference axis A and is formed by opposite light-guide plates 8.

In the example shown in Figures 2, 3, 4, 5 and 7, the lighting assembly 6 comprises two, lower and upper, lines/rows of light-guide plates 8, extending parallel to the reference axis A, placed side by side with each other. Each row of light-guide plates 8 comprises a plurality of lower light-guide plates 8 (in the accompanying Figures) arranged so as to have the light-entry side edges 8 addressed downward (in Figure 4) lying on a plane parallel to the axis A, and a plurality of upper light-guide plates 8 turned upside down with respect to the lower light-guide plates 8 and interspersed therebetween, which are arranged so as to have the light-entry side faces 8a lying on a plane parallel to the axis A and are spaced apart from the light-entry side faces 8a of the lower light-guide plates 8.

According to the embodiment shown in the attached Figures, the mini-LED array modules 9 are arranged on a series of support printed circuit boards (PCBs) 12 so that they are adjacent to the light-entry side edges 8a of the light-guide plates 8 of the rows.

The support printed circuit boards 12 are arranged within the seat 3 so as to have the mini-LED array modules 9 facing the light-entry side faces 8a of the relative light-guide plates 8 mounted on the frame 10. In the example shown, the support printed circuit boards 12 are preferably mounted on a frame 14 arranged in the seat 3. In the example shown, the frame 14 is preferably mechanically coupled to the container body 2.

The support printed circuit boards 12 may extend cantilevered from the frame 14 and be fitted into through openings obtained in the frame 10, for example on the face 10a so as to have a protruding side or edge on which the mini-LED array modules 9 are mounted. The side or edge of the support printed circuit board 12 extends so as to be arranged adjacent and facing the light-entry side faces 8a of the relative light-guide plates 8 defining a row or line.

According to the embodiment shown in Figures 6, 7 and in the schematic Figures 11-13, wherein there are two rows of side-by-side and opposite light-guide plates 8, the lighting appliance 1 comprises, preferably but not necessarily, three support printed circuit boards 12.

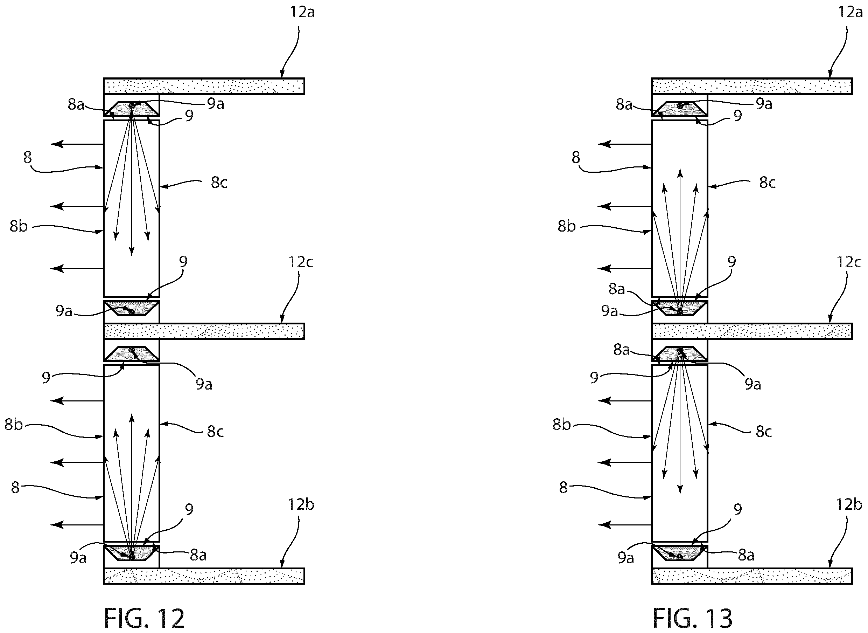

An upper printed support circuit board referred to as 12a in Figures 12 and 13 is arranged above the upper row of light-guide plates 8.

A lower support printed circuit board referred to as 12b in Figures 12 and 13 is arranged below the lower row of light-guide plates 8.

A support printed circuit board referred to as 12c in Figures 12 and 13 is arranged between the lower row and the upper row of light-guide plates 8.

As shown in the exemplary embodiments of the schematic Figures 11-13, preferably, on the lower face of the upper support printed circuit board 12a facing the upper row of light-guide plates 8, they are arranged the mini-LED array modules 9, which generate the light towards the underlying light-entry side faces 8a of the relative upper light-guide plates 8 of the row of upper light-guide plates 8.

Preferably, on the upper face of the lower support printed circuit board 12b facing the lower row of light-guide plates 8, they are arranged the mini-LED array modules 9, which generate light to the light-entry side faces 8a placed above the relative lower light-guide plates 8 of the row of light-guide plates 8.

Preferably, on the opposite upper and lower faces of the intermediate support printed circuit board 12c, they are arranged the mini-LED array modules 9 which generate the light to the light-entry side faces 8a of the respective light-guide plates 8 of the upper and lower rows. Conveniently, the mini-LED modules 9a are arranged on opposite faces of the same support printed circuit board 12b interposed between two rows of light-guide plates 8 to provide light to them.

In the example shown, the mini-LED array modules 9 are arranged on the relative support printed circuit boards 12 aligned without interruption one after the other so that the mini-LEDs 9 are adjacent and facing the light-entry side faces 8a of the light-guide plates 8.

The mini-LED array modules 9 are adapted to be selectively controlled, e.g. on the basis of electrical control signals provided by the electronic control unit 200, so as to cause a selective emission of light from the light-guide plates 8 through the respective light-emitting faces 8b.

In use, the switching on and off of the mini-LEDs 9a of a mini-LED array module 9 determines a light emission and, respectively, an absence of light emission from the emitting face 8b of the respective light-guide plate 8.

In the exemplary embodiment shown in the enclosed Figures, the selective switching on and off of the mini-LED array modules 9 of the light-guide plates 8 enables the selective and controlled activation of the light emission through the light-emitting faces 8b thereby generating messages, and/or pictograms, and/or images, or the like. Symbols, messages, pictograms, and images may be formed in the lighting appliance 1 by selectively controlling the switching on of the mini-LED array modules 9 of the light-guide plates 8 on the basis of the messages, and/or pictograms, and/or images to be generated.

The light-guide plates 8 thus form the elementary components of the image to be generated, the activation of which by the mini-LED array module 9 determines the emission of light from the lighting portions formed by the emitting faces 8b.

With reference to Figure 9, the mini-LEDs 9a of the mini-LED 9 array modules have a distance D1, relative to each other, between approximately 1 mm and 3 mm, preferably between approximately 0.5 and 2 mm. Mini-LEDs 9a also have a height of approximately 0.45 mm. The control printed circuit boards 12 may have a thickness of about 1 mm.

The Applicant has found that the use of mini-LED array modules 9 provided with mini-LEDs 9a has the technical effect of reducing the thickness of dark lines or strokes in the image obtained by switching on the light-guide plates 8.

Such a thickness is reduced by the use of mini-LED array modules 9 on printed circuit boards 12 in a configuration with light-guide plates 8 arranged as described above.

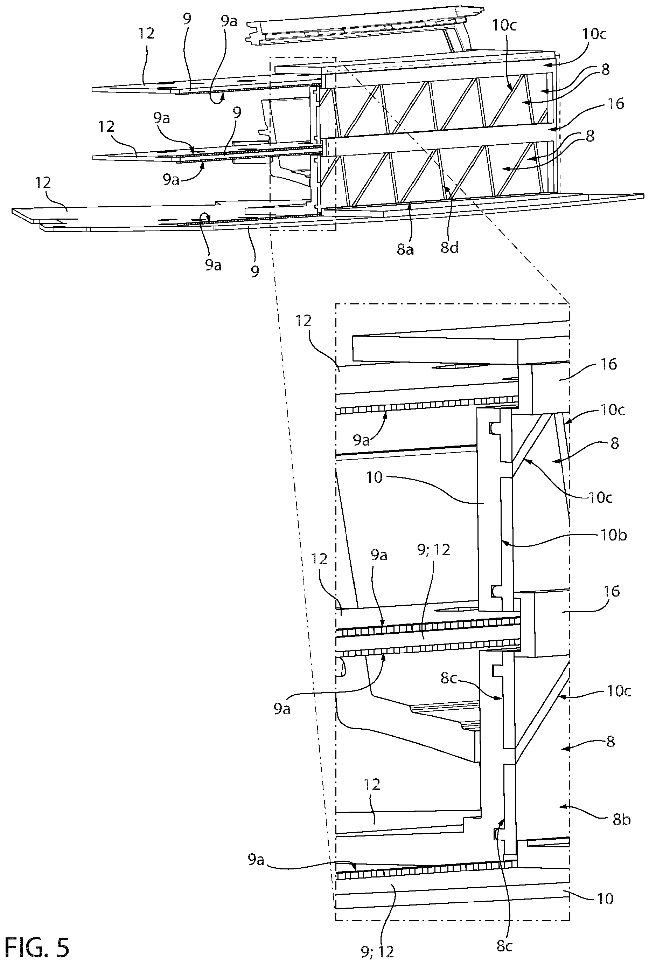

With reference to Figure 5, the lighting appliance 1 may also conveniently include an outer mask 16 that is coupled with the frame 10 so as to cover the mini-LED array modules 9. In the example shown, the outer mask 16 comprises a frame provided with bars or rods shaped so as to couple with the protruding edges of the boards 12 housing the mini-LED array modules 9a in order to cover them along the side facing the inner face of the lenticular body 5.

## Claims

1. Automotive lighting appliance (1) comprising:
a container body (2) designed to be coupled to a vehicle,
a lenticular body (5) which is coupled to said container body (2),
a lighting assembly (6) which is arranged in the container body (2) and is designed to emit light outwards from the vehicle through said lenticular body (5),
said lighting assembly (6) comprises:
a plurality of light-guide plates (8), which are arranged side by side, one next to the other, so as to lie on a common predetermined surface plane so as to form thereon a mosaic of lighting surface portions designed to back-light said lenticular body (5),
the light-guide plates (8) comprises respective light-entry side faces (8a) to receive light, and respective light-emitting faces (8b) that are designed to emit light and define respective lighting surface portions,
said light-guide plates (8) are designed so as to channel the light received by the relative light-entry side faces (8a) outwards through said light-emitting faces (8b),
said lighting assembly (6) also comprises mini-LED array modules (9a), which are arranged on said pre-defined surface plane adjacent to the light-entry side faces (8a) of respective light-guide plates (8) to provide light to the light-entry side faces (8a).

2. Automotive lighting appliance according to Claim 1, wherein the light-guide plates (8) comprise two major faces, opposite to each other, which are surrounded by an outer perimeter edge comprising sides, one of which is said light-entry side face (8a) of the light-guide plate (8),
a said major face is a light-diffusive face (8c), the other major face opposite said light-diffusive face (8c) is said light-emitting face (8b) forming said lighting surface portion,
said light-entry faces (8a) are designed to receive the light emitted by respective mini-LED array modules (9a) and provide the light within the respective light-guide plates (8),
said light-diffusive faces (8c) are designed to diffuse the light into the relative light-guide plates (8),
said light-emitting faces (8b) are designed to emit the light, which travels within the respective light-guide plates (8a), through the respective lighting surface portions.

3. Automotive lighting appliance according to Claim 1 or 2, wherein
one or more mini-LED array modules (9a) are arranged on said predetermined surface plane so as to be interposed between two adjacent sides of two respective light-guide plates (8) placed side by side,
at least one of the two adjacent sides is a light-entry side face (8a) of one of the two light-guide plates (8),
said mini-LED array module (9a) has mini-LEDs (9a) arranged facing said light-entry side face (8a) to provide light to said light-guide plate (8).

4. Automotive lighting appliance according to Claim 3, wherein
said two adjacent sides of said two adjacent light-guide plates (8) are the light-entry side faces (8a) of the respective light-guide plates (8) placed side by side,
a pair of mini-LED array modules (9) are arranged opposite to each other between the adjacent light-entry side faces (8a) of said two light-guide plates (8)placed side by side so that one mini-LED array module (9a) has the mini-LEDs (9a) facing one light-entry side face (8a) of a light-guide plate (8) to provide light, and the other mini-LED array module (9a) has the mini-LEDs (9a) facing the other light-entry side face (8a) of a light-guide plate (8) to provide light to it.

5. Automotive lighting appliance according to any one of the preceding Claims, comprising a support frame (10) which is arranged in said container body (2) and has a support wall (10a) on which seats (10b) housing respective light-guide plates (8) are housed.

6. Automotive lighting appliance according to Claim 5, wherein
said support wall (10a) has, at least partially, a three-dimensional surface shape,
said light-guide plates (8) are arranged contiguously one immediately next to the other in said seats (10b) resting on said support wall (10a) so as to form a mosaic of lighting surface portions, which extends over a three-dimensional plane.

7. Automotive lighting appliance according to any of the preceding Claims, wherein
said support face (10a) has at least partially a two-dimensional surface shape, said light-guide plates (8) are arranged one immediately next to the other in said seats (10b) resting on said support face (10a) so as to form a mosaic of lighting surface portions extending over a two-dimensional plane.

8. Automotive lighting appliance according to any one of the preceding Claims, wherein between the adjacent sides of said light-guide plates (8) other than said entry side face (8a) they are arranged shielding partitions (10c) which are designed to prevent the passage of light between adjacent light-guide plates (8) through the adjacent sides.

9. Automotive lighting appliance according to any of the preceding Claims, where the mini-LED array modules (9) are arranged on one or more electronic boards (12).

10. Automotive lighting appliance according to Claim 9 wherein
an electronic board (12) is interposed between two mutually adjacent sides of two mutually adjacent light-guide plates (8),
one of said two sides is the light-entry side face (8a) of one of the two light-guide plates (8) that are mutually adjacent,
a mini-LED array module (9a) is arranged on a first surface of the electronic board facing said light-entry side face (8a) of a light-guide plate (8).

11. Automotive lighting appliance according to Claim 10, wherein
the two adjacent sides are the two light-entry side faces (8a) of two respective light-guide plates (8) that are placed side by side to each other,
two mini-LED array modules (9a) are arranged on opposite faces of the electronic board, such that one mini-LED array module (9a) is facing the light-entry side face (8a) of one light-guide plate (8) and the other mini-LED array module (9a) is facing the light-entry side face (8a) of the other light-guide plate (8).

12. Automotive lighting appliance according to any one of the preceding Claims wherein said light-guide plates have polygonal shapes.

13. Automotive lighting appliance according to any one of the preceding Claims wherein said light-guide plates have triangular shapes.

14. Automotive lighting appliance according to any one of the preceding Claims, wherein said light-guide plates are arranged so as to form at least one row of light-guide plates extending parallel to a reference axis, the light-guide plates of the row having their respective light-entry faces lying in a plane parallel to said reference axis.

15. Automotive lighting appliance according to any one of the preceding Claims wherein the mini-LEDs (9a) of said mini-LED arrays (9) have a pitch between approximately 0.5 mm and approximately 2 mm.
